# EUROPEAN PATENT SPECIFICATION

(11) **EP 3 076 119 B1**
(45) Date of publication and mention of the grant of the patent: **10.10.2018**
(21) Application number: 14863750.7
(22) Date of filing: 23.06.2014
(51) Int. Cl.: F28G 9/00, F28G 3/16, F28G 1/16, B24C 1/00, F28D 21/00, F28D 19/04

(54) **COMPLEX CLEANING SYSTEM FOR HEAT EXCHANGER**
KOMPLEXES REINIGUNGSSYSTEM FÜR WÄRMETAUSCHER
SYSTÈME DE NETTOYAGE COMPLEXE D'ÉCHANGEUR DE CHALEUR

(30) Priority: 25.11.2013 KR 20130143648
(43) Date of publication of application: 05.10.2016
(73) Proprietor: Hong, Wonbang, Seoul 07546 (KR)
(72) Inventor: KIM, Do Jeung, Seoul 156-850 (KR); KIM, Dae Woo, Incheon 405-797 (KR); LEE, Tae-Hee, Incheon 404-270 (KR); JEONG, Song-yi, Pyeongtaek-si Gyeonggi-do 450-760 (KR); KIM, Dong-won, Seongnam-si Gyeonggi-do 463-705 (KR); JOO, Sae-Rom, Namyangju-si Gyeonggi-do 472-736 (KR)
(74) Representative: Høiberg P/S
(86) International application number: PCT/KR2014/005536
(87) International publication number: WO 2015/076472

(56) References cited:
- EP-A2- 2 415 559
- JP-A- 2001 021 289
- JP-A- 2002 005 596
- KR-A- 20110 096 603
- KR-A- 20110 096 603
- KR-B1- 100 946 362
- US-A- 6 065 528
- US-A1- 2008 264 601
- US-A1- 2011 005 706
- US-A1- 2011 207 597

## Description

### [Technical Field]

The present disclosure relates to a method of cleaning a heat exchanger, and more particularly, to a complex cleaning system for the heat exchanger, which is to solve the problems of a difficult operation or shutdown caused by the attachment of ammonium bisulfate, which is generated when unreacted ammonia and sulfur trioxide in exhaust gas are bonded with each other when a selective catalytic reduction (SCR) method is used to eliminate nitrogen oxide that are contained in the exhaust gas generated during combustion of a boiler or the like, to a heat exchanger of an air preheater or the like installed at the rear of the SCR device and blocks a passage of the exhaust gas.

US2011/005706 discloses a method of cleaning for a heat exchanger comprising: spraying high-temperature steam to the heat exchanger and eliminating contaminants formed on the surface of the thermal element, wherein, in spraying the high-temperature steam, the high-temperature steam is sprayed to an exhaust gas inlet of the heat exchanger or to a supply air inlet of the heat exchanger opposite to the exhaust gas inlet.

### [Background Art]

Nitrogen oxide, as a pollutant causing environmental harm, which is contained in the exhaust gas generated when coal, oil, gas, or combustible materials, etc. burn in a combustion engine, should be eliminated before being exhausted in air.

To eliminate nitrogen oxide contained in the exhaust gas, a selective non-catalytic reduction (SNCR) method directly spraying a reducer such as ammonia into a boiler, or a selective catalytic reduction (SCR) method spraying a reducer at the rear of the boiler, has been used. The SCR method is mainly used because the SNCR method has low denitrification efficiency.

The SCR method is a method to convert nitride oxide (NOₓ) contained in the exhaust gas into nitrogen and water by passing through catalyst after blending nitride oxide with the reducer such as ammonia.

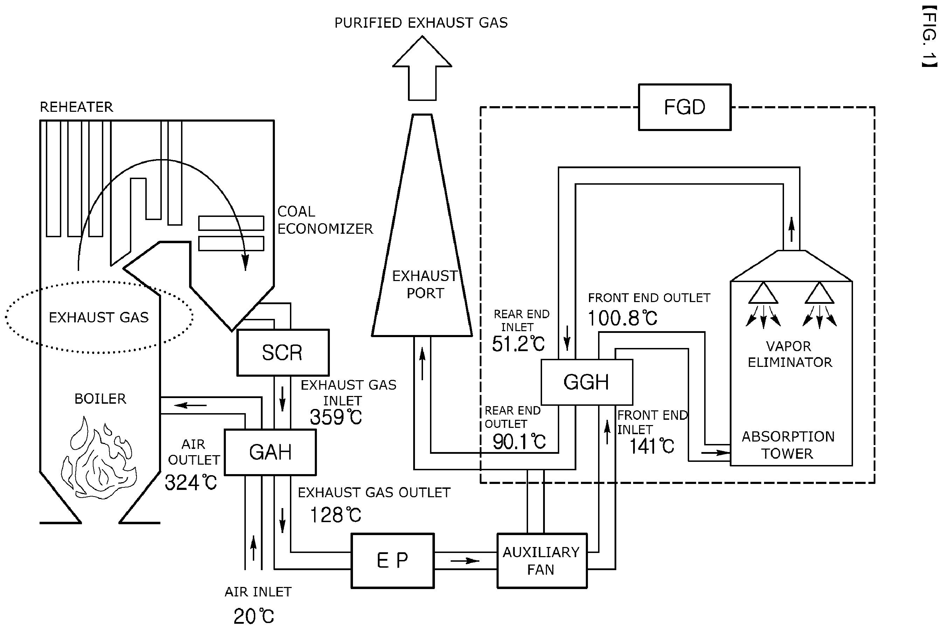

FIG. 1 illustrates a general layout of an antipollution control plant used in a power plant or a combustion engine such as an industrial boiler. According to FIG. 1, exhaust gas discharged from the boiler passes through a coal economizer, a catalytic layer of a selective non-catalytic reduction (SCR) device, an air preheater, an electrostatic precipitator, and a flue-gas desulfurizer, sequentially, to be exhausted via a chimney.

Generally, the exhaust gas generated by combustion of coal or heavy oil in the boiler contains sulfur dioxide (SO₂) and sulfur trioxide (SO₃). Sulfur dioxide is partially oxidized to sulfur trioxide during passing through denitrification catalyst, as the following chemical equation 1, and as such, a concentration of sulfur trioxide in the exhaust gas is increased after passing through the SCR device.

[Chemical Equation 1] 2SO₂ + O₂ → 2SO₃

Meanwhile, water exists in the exhaust gas, while ammonia supplied to the SCR device is partially reacted with sulfur trioxide and water to form ammonium bisulfate, as the following chemical equation 2.

[Chemical Equation 2] NH₃ + SO₃ + H₂O → NH₄HSO₄

Ammonium bisulfate decreases activity of catalyst, corrodes the rear facilities of the SCR device, and increases loss of pressure in the boiler due to blocking a hole for catalyst and a passage for the exhaust gas in the heat exchanger. For this reason, during operation of the SCR device, a discharge concentration of unreacted ammonia is normally limited to be equal to or smaller than 2 to 3 ppm. However, in spite of this limitation, during operation of the SCR device, a blocking problem in heat exchangers of various equipments occurs frequently.

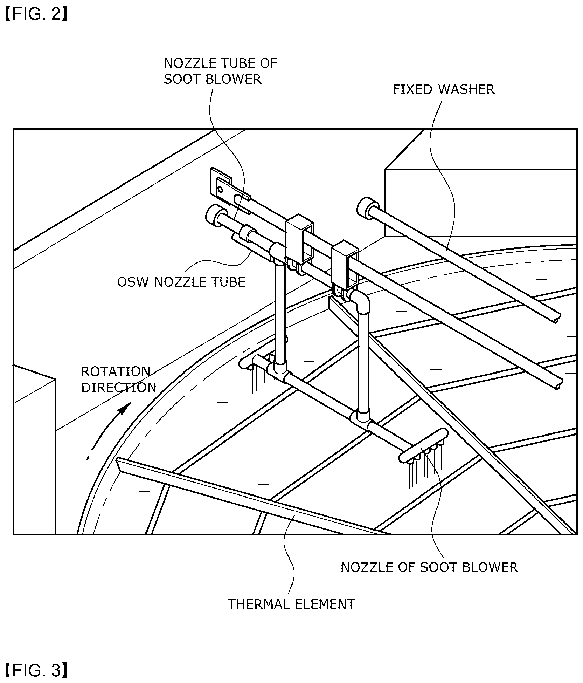

To this end, in some power plants, a real-time high-pressure water cleaning device is further provided at the heat exchanger, particularly the air preheater, which includes a soot blower as shown in FIG 2, to eliminate the blockage periodically. Spraying the high-pressure water, however, damages a coating layer of the thermal element, and as such, the blocking problem in the air preheater becomes severe. This may not be an effective cleaning method. Generally, although the high-pressure water cleaning device has very high operation pressure of 150 kg/cm²g to 200 kg/cm²g, in a case of the severe blocking problem in the air preheater, even the pressure of 300 kg/cm²g may be not enough to solve the blocking problem.

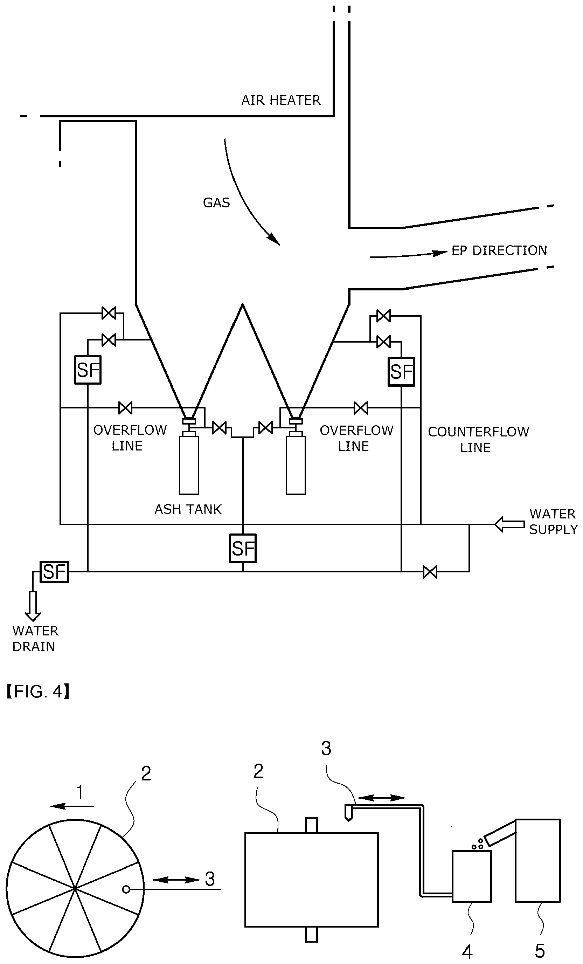

Furthermore, as shown in FIG. 2, when cleaning by using the high-pressure water, plenty of water may flow in following devices such as the electrostatic precipitator to damage them. To prevent damage of the following elements, as shown FIG. 3, a drainage system may be further provided. In this case, however, the damage by water may be not prevented fundamentally.

To this end, the same inventors as this disclosure had disclosed a dry ice cleaning device installed at the front of an exhaust gas inlet of an air preheater to eliminate pollutants by spraying dry ice pellets. (KR Patent Application Publication No. 10-2011-0096603) FIG. 4 is a block diagram illustrating a system for eliminating ammonium bisulfate in the air preheater using the dry ice cleaning device disclosed in KR Patent Application Publication No 10-2011-0096603.

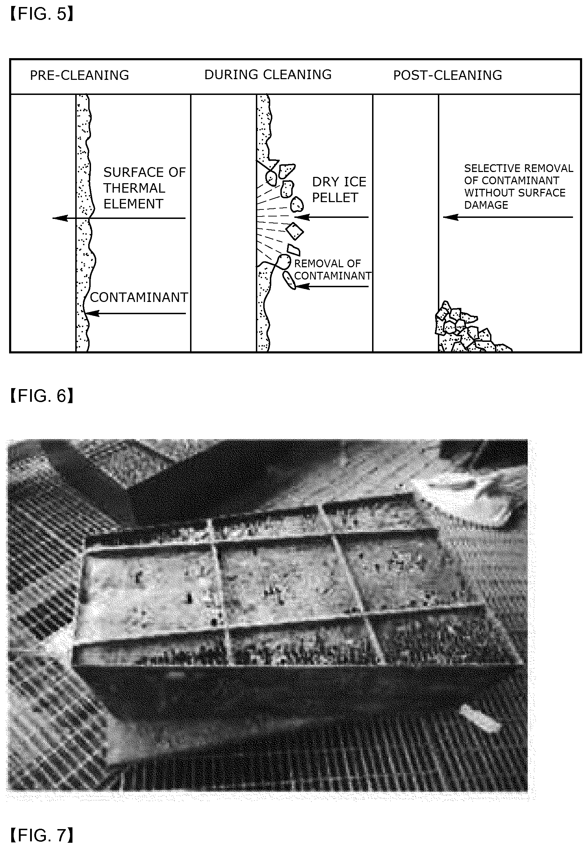

FIG. 5 shows a process for eliminating ammonium bisulfate attached on the heat element using the dry ice pellets in the dry ice cleaning device of FIG. 4. The dry ice pellets are sprayed at a high speed with air of a high-pressure (or a low-pressure) from the dry ice cleaning device to hit the surface of the thermal element of the air preheater. The dry ice pellets rapidly freezes ammonium bisulfate attached on the thermal element at ultralow temperature (for example, -78°C), and then ammonium bisulfate contracts due to a temperature difference between ammonium bisulfate and ambient air, thereby forming numbers of cracks thereof. The dry ice pellets permeate into the cracks of ammonium bisulfate while sublimating to expand equal to or greater than 800 times in its volume, thereby lifting to separate only ammonium bisulfate from the surface of the thermal element. As described above, contaminants frozen cryogenically are easily separated from the surface by a wind-pressure of the dry ice cleaning device to be discharged through the rear of the air preheater.

When only ammonium bisulfate exists as a contaminant, the contaminant is attached at a middle part of the air preheater, thereby being easily removed only using the dry ice pellets. However, when the other contaminants occur due to a decline of fuel quality, it may be hard to remove these contaminants. In particular, when the ambient temperature extremely drops due to severe cold in winter season, as shown in FIG 6, the contaminants, in which ammonium bisulfate bonded to dust is frozen with water, block an exhaust gas path at the cold end of the air preheater. Accordingly, it is ineffective to remove the contaminants by only using the cleaning technique with the dry ice pellets.

### [References of the Related Art]

### (Patent document 1)

Korea Patent Laid-open Publication No. 10-2011-0096603

### [Disclosure]

### [Technical Problem]

As described above, the present disclosure provides a complex cleaning method to effectively remove contaminants from a thermal element, while solving the problems of a damage of the thermal element by spraying high-pressure water and decline of performance and durability of an electric precipitator connected to the rear of an air preheater, due to high content of water contained in an exhaust gas.

### [Technical Solution]

The present disclosure may be applied to various industrial plants and combustion engines using SCR, more particular power plants or industrial boilers, but is not limited thereto. Hereafter, an air preheater as a heat exchanger will be described as an example, but the present disclosure is not intended to be limited thereto.

When a thermal element of an air preheater is contaminated by only ammonium bisulfate, a layer of ammonium bisulfate is mainly attached at a middle of the air preheater, thereby easily removing the layer of ammonium bisulfate only using dry ice pellets. When various contaminants, however, are accumulated naturally or due to a decline of fuel quality, it is hard to eliminate the contaminants. In particular, when an ambient temperature extremely drops due to severe cold in winter season, it often happens that ammonium bisulfate bonded to dust is frozen with water at the cold end of the air preheater, and as such, it is necessary to complement the cleaning by the sole dry ice.

To this end, the illustrated embodiment of the present disclosure provides a method of effectively eliminating the contaminants attached on the thermal element of the heat exchanger, by alternately or simultaneously operating a high-temperature steam spraying device and a dry ice spraying device, which are installed.

Furthermore, according to the illustrated embodiment of the present disclosure, dry ice and high-temperature steam are sprayed to not only an exhaust gas inlet, which is an original spraying position but also a supply air inlet, namely a cold end, in an opposite spraying direction with respect to an original spraying direction, thereby improving cleaning effect.

In an aspect of the present disclosure, the present invention provides the complex cleaning method for the air preheater to effectively remove the contaminants, for example, ammonium bisulfate and dust, formed on a surface of the air preheater by alternately or simultaneously spraying the high-temperature steam and spraying the dry ice to the air preheater. In more detail, the complex cleaning method according to the illustrated embodiment of the present disclosure includes spraying the high-temperature steam to the air preheater at a temperature of 90°C to 500°C, preferably, 90°C to 400°C and a pressure of 10 kg/cm²g to 30 kg/cm²g, preferably, 20 kg/cm²g; spraying the dry ice pellets to the inlet of the air preheater in parallel with a surface of the thermal element at a pressure of 0.5 kg/cm²g to 20 kg/cm²g and a speed of 200 m/sec and 400 m/sec, while each dry ice pellet having a diameter equal to or smaller than 3 mm, preferably, between 0.1 mm and 3 mm; and removing the contaminants formed on the thermal element.

Preferably, when the temperature is equal to or smaller than 400°C and the pressure is equal to or smaller than 20 kg/cm²g in the described method, time-worn of the air preheater may be minimized and the contaminants may be effectively eliminated.

Preferably, when cleaning by the steam, the high-temperature steam spraying device is installed at the cold end of the air preheater so as to spray the steam to the air preheater in the same direction 9 as a direction of air supplied to the boiler, or in a direction opposite to the direction of air supplied to the boiler toward the exhaust gas inlet of the air preheater. Meanwhile, when cleaning by the dry ice pellets, the dry ice spraying device is installed at the front of the exhaust gas inlet of the air preheater so as to spray the dry ice to the air preheater in the same direction 8 as a flow direction of the exhaust gas, or in a direction opposite to the flow direction of the exhaust gas toward a supply air inlet.

More preferably, the steam is sprayed to the cold end of the air preheater in the same direction 9 as the direction of the supply air and the dry ice pellets are sprayed to the air preheater in a direction of the exhaust gas supplied to the air preheater, namely, the direction 8 of the exhaust gas.

Cleaning using the steam and cleaning using the dry ice pellets may be simultaneously performed. Alternatively, after cleaning using the steam, cleaning using the dry ice pellets may be performed, whereas after cleaning using the dry ice pellets, cleaning using the steam may be sequentially performed.

According to the present disclosure, when the dry ice pellets are sprayed to the air preheater, the dry ice pellets hit the thermal element of the air preheater to be smashed, and then ammonium bisulfate covered on the surface of the thermal element is rapidly frozen by particles of smashed dry ice pellets at a temperature range of 0°C to -78.5°C, and as such, cracks occurs in the layer of ammonium bisulfate. In this case, the smashed dry ice pellet particles penetrate into the cracks in the layer of ammonium bisulfate while the dry ice particles sublimate, thereby ammonium bisulfate is separated from the thermal element. The other contaminants such as dust accumulated on the surface of the thermal element of the air preheater are separated by the same process described above, thereby cleaning of the thermal element is performed.

### [Advantageous Effects]

The complex cleaning method according to the present disclosure may be conveniently performed during operation mode, namely, without suspension of plant operation which was a prior problem, and do not damage an air preheater or an electrostatic precipitator. Furthermore, spraying high-temperature steam has a lower pressure than that of spraying high-pressure water, and water amount for spraying the high-temperature steam is very small compared with spraying the high-pressure water, and as such, water content in an exhaust gas is not increased. Accordingly, additional waste water disposal facilities are not required because contaminants are not discharged additionally.

Meanwhile, CO₂ collected from the exhaust gas of the power plant may be recycled to generate dry ice, thereby being advantageous in terms of utilization of CO₂ and cost reduction.

### [Description of Drawings]

FIG. 1 illustrates a layout of a general power plant or boiler installed conventional antipollution control facilities wherein a coal economizer provided at the rear of the boiler, a selective catalytic reduction (SCR) provided at the rear of the coal economizer, and an air preheater provided at the rear of the SCR.
FIG. 2 illustrates a conventional system for eliminating ammonium bisulfate in an air preheater using a soot blower and a water washing system.
FIG. 3 illustrates a drain system for eliminating water during water washing.
FIG. 4 illustrates a conventional system for eliminating ammonium bisulfate in an air preheater including a dry ice cleaning device instead of the water washing system shown in FIG. 2.
FIG. 5 illustrates a process for eliminating ammonium bisulfate using dry ice pellets.
FIG. 6 illustrates blocking an exhaust gas path at a cold end of the air preheater, with ammonium bisulfate coupled to dust frozen with water when ambient temperature rapidly drops in winter season.
FIG. 7 illustrates a system operating a dry ice cleaning device and a high-temperature steam spraying system which are installed together.

### [Detailed Description of Main Elements]

1: rotation direction of air preheater, 2: air preheater, 3: dry ice pellet spraying nozzle, 4: dry ice pellet spraying device, 5: dry ice pellet sizer, 6: high-temperature steam spraying device, 7: supply air outlet, 8: exhaust gas inlet, 9: supply air inlet, 10: exhaust gas outlet

### [Best Mode]

Hereinafter, the embodiments of the present disclosure will be described in detail with reference to accompanying drawings.

As shown in FIG. 5, dry ice pellets are sprayed from a cleaning device by air having a high-pressure or low-pressure to hit a surface of a thermal element of an air preheater. The dry ice pellets causes ammonium bisulfate to be rapidly frozen at ultralow temperature (-78°C), such that ammonium bisulfate contracts due to a temperature difference with ambient temperature, thereby a number of cracks are occurred. The dry ice pellets penetrate into ammonium bisulfate through the cracks while sublimating to expand equal to or greater than 800 times in its volume, thereby lifting to remove only ammonium bisulfate. According to the same process, dust or the other contaminants as well as ammonium bisulfate are separated to be eliminated and materials frozen at ultralow-temperature are easily separated to be discharged to the rear of the air preheater.

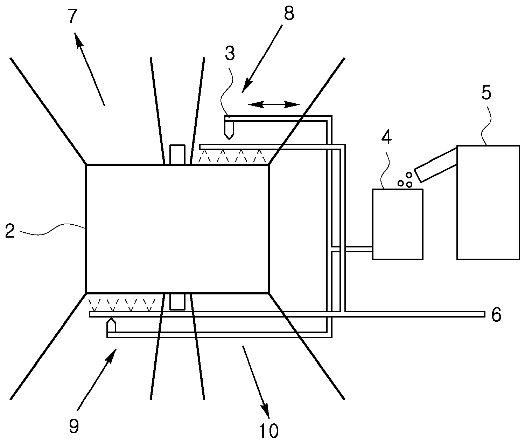

FIG. 7 shows a system improving the conventional dry ice cleaning device of FIG. 4, as adding a high-temperature steam spraying device 6 having two spraying positions, an exhaust gas inlet, namely the original spraying position, and a supply air inlet, namely a cold end of the air preheater. In the high-temperature steam spraying device 6, as a steam temperature and pressure are increased, cleaning efficiency is excellent, whereas it is possible to damage the thermal element, such that the steam is sprayed at a temperature equal to or smaller than 400°C and a pressure equal to or smaller than 20 kg/cm²g. The steam has a pressure at about a tenth part of an operation pressure of high-pressure water, for example 150 kg/cm²g to 200 kg/cm²g, in the conventional cleaning using the high-pressure water, and as such the thermal element is not damaged compared with the conventional cleaning.

Although method of cleaning the air preheater has been disclosed according to the embodiments of the present disclosure in detail with reference to the accompanying drawings, it will be understood that these embodiments are illustrative and that the scope of the inventive subject matter is not limited to them.

### [Mode for Disclosure]

Various embodiments have been described in the best mode for carrying out the disclosure.

## Claims

1. A method of complex cleaning for a heat exchanger comprising:
spraying high-temperature steam to the heat exchanger at a temperature of 90°C to 500°C and a pressure of 10 kg/cm²g to 30 kg/cm²g;
spraying dry ice pellets to an inlet of the heat exchanger in parallel with a surface of a thermal element at a pressure of 0.5 kg/cm²g to 20 kg/cm²g and a speed of 200 m/sec to 400 m/sec, each dry ice pellet having a diameter of 0.1 mm to 3 mm; and
eliminating contaminants formed on the surface of the thermal element,
wherein,
in spraying the high-temperature steam, the high-temperature steam is sprayed to an exhaust gas inlet of the heat exchanger or to a supply air inlet of the heat exchanger opposite to the exhaust gas inlet; and
in spraying the dry ice pellets, the dry ice pellets are sprayed to the exhaust gas inlet of the heat exchanger or to the supply air inlet of the heat exchanger opposite to the exhaust gas inlet.

2. The method according to claim 1, wherein spraying the high-temperature steam and spraying the dry ice pellets are performed simultaneously or sequentially.

3. The method according to claim 1, wherein spraying the dry ice pellets comprises:
rapidly freezing a layer of ammonium bisulfate covered on the surface of the thermal element of the heat exchanger at 0°C to -78.5°C using dry ice pellet particles shattered by hitting the thermal element to have cracks in the layer of ammonium bisulfate;
infiltrating the shattered dry ice pellet particles into the cracks of the layer of ammonium bisulfate; and
separating and removing ammonium bisulfate from the surface of the thermal element by sublimation of the dry ice particles.

4. The method according to claim 1, wherein the heat exchanger is an air preheater.

## Patentansprüche

1. Verfahren zum komplexen Reinigen für einen Wärmetauscher, umfassend:
Sprühen von Hochtemperaturdampf auf den Wärmetauscher bei einer Temperatur von 90 °C bis 500 °C und mit einem Druck von 10 kg/cm²g bis 30 kg/cm²g;
Sprühen von Trockeneispellets auf einen Einlass des Wärmetauschers parallel zu einer Oberfläche eines Thermoelements mit einem Druck von 0,5 kg/cm²g bis 20 kg/cm²g und mit einer Geschwindigkeit von 200 m/s bis 400 m/s, wobei jedes Trockeneispellet einen Durchmesser von 0,1 mm bis 3 mm aufweist; und
Entfernen von Verunreinigungen, die sich auf der Oberfläche des Thermoelements gebildet haben, wobei
beim Sprühen des Hochtemperaturdampfes der Hochtemperaturdampf auf einen Abgaseinlass des Wärmetauschers oder auf einen Zulufteinlass des Wärmetauschers gegenüber dem Abgaseinlass gesprüht wird; und
beim Sprühen der Trockeneispellets die Trockeneispellets auf den Abgaseinlass des Wärmetauschers oder den Zulufteinlass des Wärmetauschers gegenüber dem Abgaseinlass gesprüht werden.

2. Verfahren nach Anspruch 1, wobei das Sprühen des Hochtemperaturdampfes und das Sprühen der Trockeneispellets gleichzeitig oder nacheinander durchgeführt werden.

3. Verfahren nach Anspruch 1, wobei das Sprühen der Trockeneispellets Folgendes umfasst:
schnelles Einfrieren einer Schicht von Ammoniumhydrogensulfat, die sich auf die Oberfläche des Thermoelements des Wärmetauschers gelegt hat, bei 0 °C bis -78,5 °C unter Verwendung von Trockeneispellet-Teilchen, die zerbrechen, wenn sie auf das Thermoelement prallen, um Risse in der Ammoniumhydrogensulfat-Schicht zu erzeugen;
Eindringen der zerbrochenen Trockeneispellet-Teilchen in die Risse der Ammoniumhydrogensulfat-Schicht; und
Trennen und Entfernen des Ammoniumhydrogensulfats von der Oberfläche des Thermoelements durch Sublimation der Trockeneis-Teilchen.

4. Verfahren nach Anspruch 1, wobei der Wärmetauscher ein Luftvorwärmer ist.

## Revendications

1. Procédé de nettoyage complexe pour un échangeur de chaleur comprenant :
la pulvérisation de vapeur à haute température vers l'échangeur de chaleur à une température de 90 °C à 500 °C et à une pression de 10 kg/cm²g à 30 kg/cm²g ;
la pulvérisation de boulettes de glace carbonique vers une admission de l'échangeur de chaleur en parallèle avec une surface d'un élément thermique à une pression de 0,5 kg/cm²g à 20 kg/cm²g et à une vitesse de 200 m/s à 400 m/s, chaque boulette de glace carbonique ayant un diamètre de 0,1 mm à 0,3 mm ; et
l'élimination de contaminants formés sur la surface de l'élément thermique,
dans lequel,
en pulvérisant la vapeur à haute température, la vapeur à haute température est pulvérisée vers une admission de gaz d'échappement de l'échangeur de chaleur ou vers une admission d'air de l'échangeur de chaleur opposée à l'admission de gaz d'échappement ; et
en pulvérisant les boulettes de glace carbonique, les boulettes de glace carbonique sont pulvérisées vers l'admission de gaz d'échappement de l'échangeur de chaleur ou vers l'admission d'air de l'échangeur de chaleur opposée à l'admission de gaz d'échappement.

2. Procédé selon la revendication 1, dans lequel la pulvérisation de la vapeur à haute température et la pulvérisation des boulettes de glace carbonique sont réalisées simultanément ou successivement.

3. Procédé selon la revendication 1, dans lequel la pulvérisation des boulettes de glace carbonique comprend :
la congélation rapide d'une couche de bisulfate d'ammonium recouvrant la surface de l'élément thermique de l'échangeur de chaleur à une température de 0 °C à -78,5 °C en utilisant des particules de boulette de glace carbonique brisées en frappant l'élément thermique pour avoir des fissures dans la couche de bisulfate d'ammonium ;
l'infiltration des particules de boulette de glace carbonique brisées dans les fissures de la couche de bisulfate d'ammonium ; et
la séparation et le retrait du bisulfate d'ammonium de la surface de l'élément thermique par sublimation des particules de glace carbonique.

4. Procédé selon la revendication 1, dans lequel l'échangeur de chaleur est un réchauffeur d'air.
